Europäisches Patentamt

European Patent Office

Office européen des brevets

(19)

(11) Numéro de publication : **0 163 800**
**B1**

(12) **FASCICULE DE BREVET EUROPÉEN**

(45) Date de publication du fascicule du brevet :
23.11.89

(51) Int. Cl.⁴ : **B 23 H   5/08**

(21) Numéro de dépôt : **84810330.5**

(22) Date de dépôt : **02.07.84**

(54) **Procédé et dispositif pour le polissage par électroérosion.**

(30) Priorité : 16.12.83 CH 6722/83

(43) Date de publication de la demande :
11.12.85 Bulletin 85/50

(45) Mention de la délivrance du brevet :
23.11.89 Bulletin 89/47

(84) Etats contractants désignés :
DE FR GB

(56) Documents cités :
FR–A– 2 290 991
US–A– 4 370 537

(73) Titulaire : **CHARMILLES TECHNOLOGIES S.A.**
**8-10, rue du Pré-de-la-Fontaine**
**CH-1217 Meyrin 1 (CH)**

(72) Inventeur : **Fery, Philippe**
**21, chemin de Vers**
**CH-1228 Plan-les-Ouates (Genève) (CH)**
Inventeur : **Delpretti, Roger**
**6D, chemin de Poussy**
**CH-1214 Vernier (Genève) (CH)**

(74) Mandataire : **Ardin, Pierre et al**
**PIERRE ARDIN & CIE 22, rue du Mont-Blanc Case**
**postale 60**
**CH-1211 Genève 1 (CH)**

Jouve, 18, rue St-Denis, 75001 Paris, France

## Description

Il est bien connu en électroérosion d'effectuer des phases successives de finition en déplaçant la pièce et l'outil selon un mouvement relatif de translation cyclique dans un plan perpendiculaire à la direction de pénétration de l'outil dans la pièce, ces phases étant réalisées avec des décharges de moins en moins puissantes. Les états de surface obtenus ont une limite qui ne correspond pas toujours aux exigences industrielles, notamment l'obtention d'une rugosité présentant des cratères inférieurs à 0,1 μm en valeur moyenne.

On connaît déjà un procédé de polissage par électroérosion d'une pièce-électrode au moyen d'un outil-électrode, selon lequel on déplace ces électrodes en suivant un mouvement relatif de translation cyclique d'amplitude déterminée, tandis qu'on produit entre ces électrodes des décharges successives de puissance déterminée, l'amplitude de la translation étant choisie en fonction de la réduction des dimensions de l'outil-électrode par rapport à celles des surfaces à polir (voir par exemple le brevet français 1 274 953).

L'invention a pour but d'obtenir le meilleur état de surface possible pour des conditions de départ déterminées. En effet, la durée de l'opération de polissage est décisive quant à l'état de surface obtenu. Il est évident que si cette durée est trop brève, on n'obtient pas le meilleur état de surface possible. Par contre, si l'on poursuit l'opération de polissage lorsque ce meilleur état de surface a été obtenu, on constate une détérioration progressive de l'état de la surface usinée.

L'obtention automatique du meilleur résultat possible est obtenu dans le procédé faisant l'objet de la revendication 1.

L'invention comprend également un dispositif pour la mise en œuvre de ce procédé.

Le dessin annexé illustre, à titre d'exemple, la mise en œuvre du procédé faisant l'objet de l'invention.

Les figures 1 et 2 montrent l'état de surface en fonction de deux paramètres.

La figure 3 montre une relation caractéristique du procédé selon l'invention.

La figure 4 est le schéma d'une machine pour la mise en oeuvre du procédé faisant l'objet de l'invention.

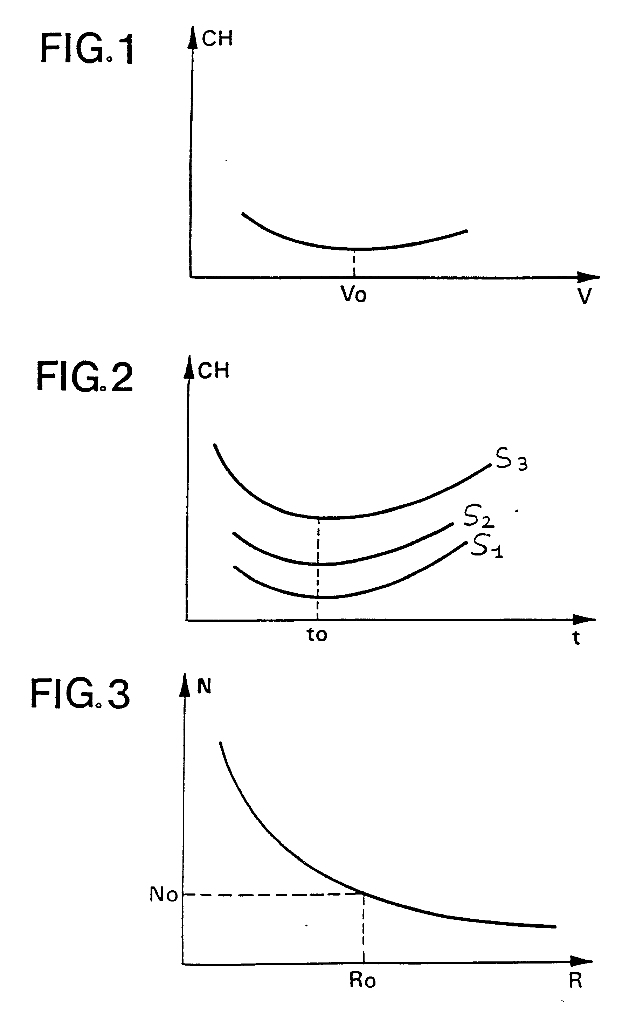

La figure 1 représente la rugosité CH en fonction de la vitesse tangentielle V de translation circulaire. Cette dernière est égale au produit de la vitesse angulaire ω par l'amplitude R de la translation. Cette courbe montre que la rugosité minimale est obtenue pour une vitesse tangentielle Vo déterminée.

La figure 2 montre l'état de surface CH en fonction de la durée t de l'usinage pour différentes valeurs de la surface usinée et dans le cas où la vitesse tangentielle Vo est utilisée. La courbe S1 se rapporte à une petite surface, tandis que les courbes S2 et S3 se rapportent à des surfaces de plus en plus grandes. Il est surprenant de constater que chacune de ces courbes donne une rugosité minimale pour une durée d'usinage to qui est indépendante de l'aire de la surface usinée. Dans la pratique, le temps to a une valeur de l'ordre de 60 min., mais il est clair que cette durée optimale peut s'écarter plus ou moins de cette valeur suivant les conditions d'usinage, notamment suivant les matières constituant les deux électrodes pièce et outil.

Dans un exemple pratique la vitesse Vo de la courbe selon la figure 1 est de 1 500 μm/min. et pour un usinage to de 60 min. le produit Vo.to est de 90 000 μm. Comme la vitesse Vo doit rester indépendante du rayon de la translation circulaire, il est clair que le nombre de cycle/min. de cette translation doit être ajusté selon une fonction inverse de l'amplitude choisie. De même, le nombre total de cycles à effectuer pour obtenir le temps d'usinage to est également une fonction inverse de l'amplitude choisie.

Dans le cas envisagé plus haut, où le produit du nombre de cycles par l'amplitude de la translation est de 90 000, il faudra effectuer 900 cycles de translation si l'on a choisi une amplitude de 100 μm pour obtenir la vitesse Vo de 1 500 μm/min. en même temps qu'un temps d'usinage de 60 min.

La courbe de la figure 3 montre la relation qu'il faut respecter entre le nombre de cycles d'usinage N et l'amplitude R de la translation pour obtenir un usinage de durée to à une vitesse Vo, c'est-à-dire dans les conditions d'obtention du meilleur état de surface possible.

Comme le produit Vo.to définit la distance totale parcourue par un point de l'électrode au cours de l'usinage, il est clair que ce produit est aussi égal à $N.2\pi R$, où N est le nombre total de cycle effectués et R est le rayon de la translation circulaire. Ainsi, pour obtenir les conditions optimales N et R doivent varier selon la fonction inverse illustrée à la figure 3. Cette dernière permet donc après avoir choisi la valeur de R de déterminer le nombre de cycles de translation à effectuer pour obtenir le meilleur état de surface possible.

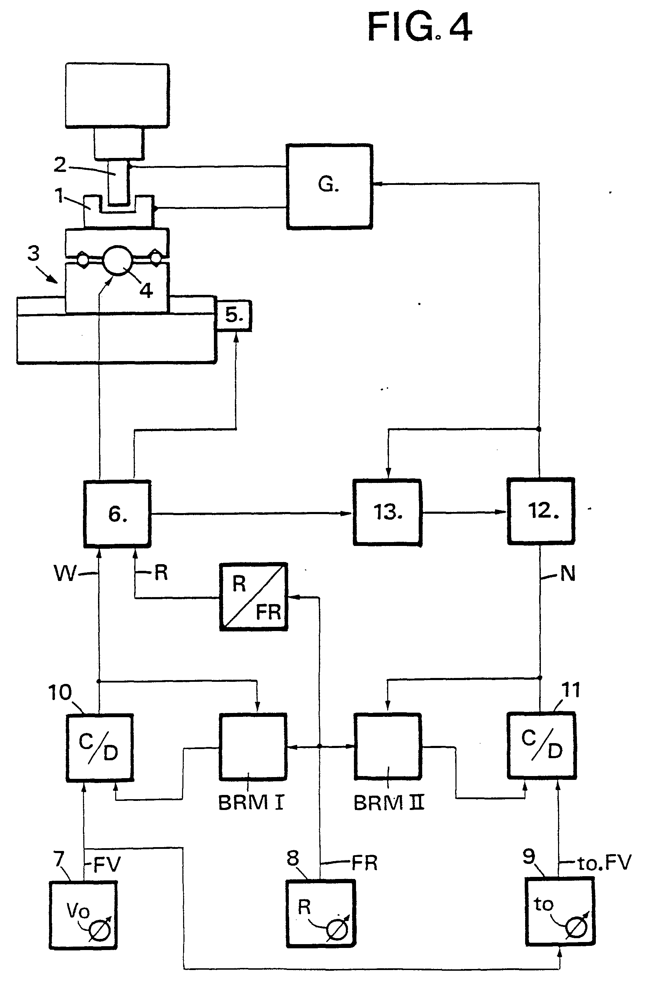

La machine illustrée à la figure 4 comprend une table à mouvements croisés commandée par deux moteurs pas-à-pas 4,5 qui sont pilotés par un circuit 6 répondant à deux signaux fixant les valeurs de ω et de R, représentant respectivement la vitesse angulaire et le rayon de la translation.

Le circuit pour former ces deux signaux et pour commander l'arrêt de l'usinage au moment de l'obtention du meilleur état de surface possible comprend trois éléments d'introduction de données 7, 8 et 9 situés au bas de la figure 4. L'élément 7 prévu pour l'introduction de la vitesse tangentielle est constitué par un générateur d'impulsions fournissant des impulsions à une fréquence proportionnelle à la vitesse tangentielle choisie par l'usager. De même l'élément 8 est un générateur fournissant des impulsions à une fréquence proportionnelle à l'amplitude choisie pour la translation. Enfin l'élément 9 est un multiplicateur qui fournit des impulsions à une fréquence proportionnelle à la fréquence FV fournie par le générateur 7 multipliée par le temps to choisi pour la durée de l'usinage. Ce multiplicateur 9 fournit donc des impulsions à une fréquence to.FV.

Le signal FV du générateur 7 est appliqué à une entrée d'un compteur-décompteur 10 dont le contenu est indiqué par un signal digital appliqué à une entrée du circuit de commande des moteurs 4-5. Ce signal est aussi appliqué à un « Binary Rate Multiplier » BRM1, dont il fixe le taux de multiplication.

L'entrée de ce BRM1 reçoit les impulsions fournies par le générateur 8 à une fréquence FR définissant l'amplitude désirée de la translation. Le signal de sortie du BRM1 est donc égal au produit de la fréquence FR par le taux de multiplication $\omega$ et ce signal $\omega \cdot$ FR est appliqué à l'entrée de décomptage du compteur 10. Les impulsions de fréquence FV appliquées au compteur 10 augmentent la valeur de son signal digital de sortie jusqu'à ce que les impulsions de sortie du BRM1 atteignent la même fréquence que FV et que, par conséquent, le signal de sortie se stabilise. A ce moment, le signal digital définit $\omega$, car FV = $\omega \cdot$ FR, ce qui revient à la relation Vo = $\omega \cdot$ R.

Une disposition analogue à celle donnant l'affichage digital fixant la valeur de $\omega$ est prévue pour donner un signal digital indiquant le nombre de cycles de translation à effectuer. Cette disposition comprend un compteur-décompteur 11 dont une entrée reçoit le signal to.VF venant du multiplicateur 9 et dont l'autre entrée reçoit le signal de sortie d'un BRM2 dont le taux de multiplication est donné par le signal digital de sortie du compteur 11.

Dans ces conditions, les signaux d'entrée du compteur 11 représentent une valeur proportionnelle à la longueur totale du chemin parcouru par un point quelconque de l'outil-électrode pendant toute la durée de l'usinage. En effet, l'entrée reliée au multiplicateur 9 reçoit un signal représentant la multiplication de to par la vitesse tangentielle de la translation, de sorte que pour obtenir l'équilibre du compteur 11, le signal de sortie du BRM2 doit correspondre à la longueur d'un tour de translation ($2 \pi$ R) multiplié par le nombre de cycles de translation total N. En l'état d'équilibre du compteur 11, son signal digital de sortie définit donc $2 \pi$ N. Ce signal est appliqué à un discriminateur 12 dont une autre entrée reçoit d'un compteur 13 un signal proportionnel à N obtenu par comptage des cycles de translation signalés par le circuit 6. Lorsque le nombre de cycles atteint celui fixé par le compteur 11, le discriminateur 12 émet un signal qui est appliqué au générateur G pour interrompre l'usinage et au compteur 13 pour le remettre à zéro.

Le dispositif décrit permet donc d'obtenir automatiquement l'arrêt de l'opération de polissage à la fin de la durée optimale to. En outre, la vitesse optimale Vo étant donnée par l'élément 7, la vitesse angulaire de la translation est calculée pour tenir compte de l'amplitude R que l'on a choisie pour cette translation.

Il est clair que dans la figure 4, les éléments 9, 11, 12, 13 et BRM2 pourraient être remplacés par un compteur de durée susceptible de bloquer le générateur G après l'écoulement du temps prédéterminé to, ce qui revient aussi à fixer le nombre total de cycles effectués.

Le choix de l'amplitude de la sélection est effectué par l'opérateur en fonction du travail à accomplir. A titre d'exemple pour le polissage d'une médaille, on choisira un rayon de translation de l'ordre de 20 $\mu$m, tandis que pour le polissage d'une grande pièce présentant une surface unie, on pourra prendre avantageusement un rayon de l'ordre de 800 $\mu$m.

Il est bien entendu que la translation ne doit pas nécessairement être circulaire et qu'on peut appliquer le même principe dans le cas d'une translation de trajectoire différente, par exemple rectangulaire ou elliptique. L'exemple décrit se rapporte au polissage par la face frontale de l'outil-électrode 2, mais il va de soi que le même principe peut être appliqué pour le polissage des parois latérales de la pièce à polir. Enfin, il y a lieu de relever que les meilleurs états de surface sont obtenus lorsqu'on laisse le fluide d'usinage dans la zone de travail sans le renouveler.

## Revendications

1. Procédé de polissage par électroérosion d'une pièce électrode (1) au moyen d'un outil-électrode (2), selon lequel on déplace ces électrodes en suivant un mouvement relatif de translation cyclique d'amplitude (R) déterminée tandis qu'on produit entre ces électrodes des décharges successives de puissance déterminée, l'amplitude (R) de la translation étant choisie en fonction de la réduction des dimensions de l'outil-électrode par rapport à celles des surfaces à polir, caractérisé par un réglage de la vitesse tangentielle de translation (Vo) à une valeur prédéterminée et par le fait que le nombre (N) de cycles de translation effectués est inversement proportionnel à l'amplitude (R) choisie pour la translation.

2. Dispositif pour polir par électroérosion une pièce électrode (1) de surface prédéterminée, comportant un mécanisme de commande des déplacements relatifs des électrodes (1, 2) pour effectuer un mouvement de translation cyclique, des moyens pour ajuster l'amplitude (R) et la vitesse tangentielle de translation (Vo) et un circuit générateur d'impulsions de tension pour provoquer des décharges de puissance déterminée entre les électrodes, caractérisé par un circuit de calcul du nombre (N) de cycles de translation à effectuer selon une fonction inverse de l'amplitude (R) de cette translation, un circuit de comptage du nombre des cycles effectués au cours de l'usinage et un circuit de commande pour interrompre l'usinage lorsque le nombre (N) de cycles calculé est atteint.

## Claims

1. A method of polishing a workpiece (1) by electro-erosion using a machining electrode (2) with the workpiece as an electrode, in which the said electrodes are displaced in cyclic, relative translational movement of predetermined amplitude (R) while successive discharges of predetermined power are produced between the electrodes, the amplitude (R) of the said translation being chosen as a function of the reduction in the dimensions of the machining electrode in relation to those of the surfaces being polished, the method being characterised by controlling the tangential velocity of translation (Vo) to a predetermined value, and by the fact that the number (N) of cycles of said translational movement carried out is inversely proportional to the amplitude (R) chosen for the translation.

2. Apparatus for polishing by electro-erosion a workpiece (1) of predetermined surface acting as an electrode, the apparatus comprising a mechanism for controlling relative displacements of the electrodes (1, 2) in order to perform a cyclic translational movement, means for adjusting the amplitude (R) and the tangential translational velocity (Vo), and a voltage pulse generating circuit for producing discharges of predetermined power between the electrodes, characterised by a circuit for calculating the number (N) of cycles of translation to be performed as an inverse function of the amplitude (R) of the said translation, a circuit for counting the number of cycles executed during the machining process, and a control circuit for interrupting the machining process when the calculated number (N) of cycles has been reached.

## Patentansprüche

1. Verfahren zum elektroerosiven Polieren einer Werkstückelektrode (1) mittels einer Werkzeugelektrode (2), bei dem man diese Elektroden gemäß einer zyklischen translatorischen Relativbewegung der bestimmten Amplitude (R) verstellt, während man zwischen diesen Elektroden aufeinanderfolgende Entladungen bestimmter Stärke erzeugt, wobei die Amplitude (R) der Translation in Abhängigkeit der Reduktion der Abmessungen der Werkzeugelektrode im Verhältnis zu denjenigen der zu polierenden Oberflächen gewählt wird, gekennzeichnet durch eine Regelung der tangentialen Translationsgeschwindigkeit (Vo) auf einen vorbestimmten Wert und durch die Tatsasche, daß die Anzahl (N) der ausgeführten Translationszyklen der für die Translation gewählten Amplitude (R) umgekehrt proportional ist.

2. Vorrichtung zum elektroerosiven Polieren einer Werkstückelektrode (1) vorbestimmter Oberfläche, mit einem Steuermechanismus für Relativverstellungen von Elektroden (1, 2) zum Ausführen einer zyklischen Translationsbewegung, mit Mitteln zum Einstellen der Amplitude (R) und der tangentialen Translationsgeschwindigkeit (Vo), und mit einem Generatorkreis für Spannungsimpulse zum Hervorrufen von Entladungen bestimmter Leistung zwischen den Elek-roden, gekennzeichnet durch eine Rechenschaltung für die Anzahl (N) der Translationszyklen, die entsprechend einer Umkehrfunktion der Amplitude (R) von dieser Translation durchzuführen sind, durch eine Zählschaltung für die im Verlauf der Bearbeitung ausgeführte Anzahl der Zyklen, und durch eine Steuerschaltung zum Unterbrechen der Bearbeitung, wenn die Anzahl (N) der berechneten Zyklen erreicht ist.

FIG.1

FIG.2

FIG.3

# FIG. 4